# EUROPÄISCHE PATENTSCHRIFT

(11) **EP 2 743 097 B1**
(45) Veröffentlichungstag und Bekanntmachung des Hinweises auf die Patenterteilung: **27.12.2017**
(21) Anmeldenummer: 13005598.1
(22) Anmeldetag: 02.12.2013
(51) Int. Cl.: B60B 33/02

(54) **Betätigungsvorrichtung für zwei feststellbare Lenkrollenbaueinheiten an einem fahrbaren Transportwagen**
Actuation device for two lockable guide roller units on a mobile transport trolley
Dispositif d'actionnement pour deux unités de construction de galets de direction pouvant être fixées sur un chariot de transport mobile

(30) Priorität: 15.12.2012 DE 202012011982 U
(43) Veröffentlichungstag der Anmeldung: 18.06.2014
(73) Patentinhaber: Fechtel Transportgeräte GmbH, 33829 Borgholzhausen (DE)
(72) Erfinder: Fechtel, Hinrich, 33829 Borgholzhausen (DE); Brömmelsiek, Ralf, 33790 Halle/Westfalen (DE)
(74) Vertreter: Brandt, Detlef

(56) Entgegenhaltungen:
- WO-A1-96/05076
- WO-A1-99/06260
- DE-A1- 1 753 889
- DE-A1- 3 212 994
- DE-A1- 10 259 448
- DE-A1- 19 716 550
- DE-A1-102011 052 981
- DE-U1- 20 006 806
- DE-U1-202010 012 390
- JP-A- H11 245 608
- US-A1- 2006 032 491

## Beschreibung

### Technisches Umfeld

Die Erfindung betrifft eine Betätigungsvorrichtung für zwei feststellbare Lenkrollenbaueinheiten an einem fahrbaren Transportwagen mit an jeder Lenkrollenbaueinheit angeordneten Betätigungsschiebern für eine Feststellvorrichtung, die jeweils in Montageplatten der betreffenden Lenkrollenbaueinheit geführt sind und auf einer Führungsachse gelenkig mit einem Anschlusshebel gelagert sind, wobei die Anschlusshebel auf einer an den jeweiligen Montageplatten festgelegten Drehachse drehbar sind und mittels einer Verbindungsstange miteinander gekoppelt sind.

### Stand der Technik

Lenkrollenbaueinheiten der eingangs geschilderten gattungsgemäßen Art sind in unterschiedlicher technischer Ausgestaltung seit langem bei Transportwagen üblich (siehe z.B. DE-A-102 59 448). Die Transportwagen dienen vorrangig im Industriebereich zur Verlagerung von Gütern zwischen unterschiedlichen Bearbeitungsstationen. Diese Transportwagen können herkömmliche Plattformwagen, Gitterwandwagen oder Transportwagen mit anderen Aufbauten sein. Im Rahmen ihres Einsatzes kann es notwendig sein, die Transportwagen gegen unbeabsichtigtes und selbständiges Bewegen zu sichern, wofür in aller Regel eine Blockierung der zu den Lenkrollenbaueinheiten gehörenden Rollen ausreicht. Gleichzeitig hat es sich in der Praxis jedoch als vorteilhaft erwiesen, die Lenkrollenbaueinheiten auch in Bezug auf eine Drehung der das Laufrad aufnehmenden Radgabel zu sichern. Die Betätigung der Feststellvorrichtung für die Blockierung der Laufrolle und der zugehörigen Radgabel erfolgt üblicherweise durch einen an einer Montageplatte der Lenkrollenbaueinheit angeordneten Anschlusshebel, welcher über eine gelenkige Verbindung mittels einer Führungsachse den Betätigungsschieber bewegen kann.

Da die im industriellen Bereich verwendeten Transportwagen üblicherweise mit jeweils zwei Gelenkrollenbaueinheiten der eingangs geschilderten Art ausgestattet sind, sind vom Bediener für eine zuverlässige Blockierung oftmals zwei Anschlusshebel mit dem Fuß zu betätigen. Um die Bedienung zu vereinfachen sind aus dem Stand der Technik bereits Lösungen bekannt, die beiden Anschlusshebel mittels einer Verbindungsstange zu koppeln, so dass ein Herabdrücken der Verbindungsstange die gleichzeitige Betätigung der Anschlusshebel zur Blockierung beider Lenkrollenbaueinheiten ermöglicht.

Die bekannten Betätigungsvorrichtungen weisen jedoch in der Praxis unterschiedliche Nachteile auf. Bei einigen Ausführungsvarianten ist die konstruktive Gestaltung der Koppelung der Verbindungsstange mit den Anschlusshebeln durch Einsatz mehrere Bauteile sowohl in fertigungstechnischer als auch montagetechnischer Hinsicht aufwändig. Darüber hinaus besteht bei einigen Transportwagen aufgrund ihres Aufbaus und der damit verbundenen Tragrahmengestaltung, insbesondere im Bereich der den Lenkrollenbaueinheiten benachbarten Eckenhülseneinsätzen zur Festlegung von Schiebebügeln und dergleichen eine nicht unbeträchtliche Schwierigkeit, den Anschlussbereich zwischen Verbindungsstange und Anschlusshebel in Bezug auf die notwendigen Bauabmaße hier unterzubringen. Oftmals sind speziell angepasste Bauteile notwendig, um überhaupt eine gattungsgemäße Betätigungsvorrichtung an den Transportwagen einsetzen zu können.

### Aufgabe der Erfindung

Ausgehend von den geschilderten Nachteilen der konstruktiven Ausführungsbeispiele aus dem Stand der Technik besteht die Aufgabe der Erfindung darin, eine Betätigungsvorrichtung der gattungsgemäßen Art so weiter zu entwickeln, dass an Transportwagen unterschiedlichster Gestaltung eine gleichzeitige Betätigung zweier Lenkrollenbaueinheiten mit einfachen konstruktiven Mitteln und mit minimalem Montageaufwand für eine entsprechende Betätigungsvorrichtung eingesetzt werden kann.

Darüber hinaus soll die Funktion der Betätigungsvorrichtung so optimiert werden, dass ein leichtgängige Blockierung der Lenkrollenbaueinheiten ermöglicht wird, die die notwendige Akzeptanz für eine Blockierung der Transportwagen nach dem Abstellen erhöht, um so die Sicherheit im Industriebetrieb zu steigern.

### Lösung der Aufgabe

Die gestellte Aufgabe wird für eine Betätigungsvorrichtung für zwei feststellbare Lenkrollenbaueinheiten an einem fahrbaren Transportwagen mit den im gattungsbildenden Teil des Anspruches 1 genannten Merkmalen dadurch gelöst, dass die Koppelebene von Verbindungsstange und Anschlusshebel zwischen der Lageebene der Führungsachse und der beabstandet dazu liegenden Lageebene von der Drehachse angeordnet ist.

Durch die geschilderte Merkmalskombination wird der Befestigungspunkt zwischen Verbindungsstange und Anschlusshebel aus dem unmittelbaren Bereich des Plattformrahmens eines Transportwagens entfernt. Die durch die Lage der Koppelebene von Verbindungsstange und Anschlusshebeln vorhandene Kröpfung der Anschlusshebel ist auf einfache Art und Weise herstellungstechnisch realisierbar, wobei alle wesentlichen Elemente der Lenkrollenbaueinheiten bis auf die Aufnahme für die Achse, auf der der jeweilige Anschlusshebel drehbar in Bezug auf die Montageplatte gehalten ist, unverändert bleiben können. Die Verlagerung des Befestigungspunktes ermöglicht darüber hinaus eine erleichterte Montage der Verbindungsstange an den Anschlusshebel und verringert somit insgesamt die Herstellkosten der mit einer derartigen Betätigungsvorrichtung versehenen Transportwagen.

Besondere Ausgestaltungen des Gegenstandes der Erfindung ergeben sich in Zusammenschau mit der technischen Lehre des Anspruches 1 zusätzlich aus den auf den Hauptanspruch rückbezogenen Unteransprüchen.

Es hat sich insbesondere als vorteilhaft erwiesen, wenn der Befestigungspunkt zwischen Verbindungsstange und Anschlusshebel an der Verbindungsstange in Richtung ihrer Längsachse verschiebbar ist. Durch diese Maßnahme können sowohl fertigungstechnisch bedingte Unterschiede im Abstand der Lenkrollenbaueinheiten zueinander ausgeglichen als auch der Einsatz der erfindungsgemäßen Betätigungsvorrichtung bei Transportwagen unterschiedlicher Bauart ermöglicht werden, bei denen der Abstand die Lenkrollenbaueinheiten aufgrund der Breite der Transportwagen konstruktionsbedingt unterschiedlich ausfallen.

Die Verschieblichkeit der Befestigungspunkte zwischen Verbindungsstange und Anschlusshebel kann entsprechend einer vorteilhaften Weiterbildung durch eine Langlochausnehmung an der Verbindungsstange ermöglicht werden.

Darüber hinaus kann es zweckmäßig sein, dass in der Mitte zwischen den Befestigungspunkten von Verbindungsstange und Anschlusshebeln ein Fußpedal angeordnet ist, welches auf der dem Transportwagen abgewandten Vorderseite der Verbindungsstange über diese vorsteht. Die geschilderte konstruktive Gestaltung erleichtert die Benutzung der Betätigungsvorrichtung, in dem der Fuß des Bedieners deutlich sichtbar außerhalb des Umrisses des Transportwagenrahmens die Bewegung der Verbindungsstange herbeiführen kann.

Der Abstand des vorderen freien Endes des Fußpedals von seinem Befestigungspunkt an der Verbindungsstange kann darüber hinaus variabel gestaltet sein. Durch diese Maßnahme ist durch einen größeren oder kleineren Hebelarm des Fußpedals in Bezug auf die Verbindungsstange eine Änderung der Betätigungskräfte möglich.

Als zusätzlich vorteilhaft hat es sich erwiesen, wenn am Fußpedal ein Puffer zur Endlagendämpfung der Verbindungsstange in der Freigabestellung der Lenkrollenbaueinheiten vorhanden ist. Eine derartige konstruktive Gestaltung vermeidet in der Freigabestellung der Betätigungsvorrichtung insbesondere bei Bewegung des Transportwagens über holperige Untergründe Klappergeräusche, wobei gleichzeitig Lackbeschädigungen am Transportwagenrahmen unterbunden werden.

Zur Vermeidung von Verletzungen hat es sich darüber hinaus als zweckmäßig erwiesen, der Verbindungsstange eine u-förmige Form zu geben, wobei der Verbindungssteg zwischen den beiden parallel beabstandet zueinander angeordneten u-förmigen Schenkel gerundet ist.

Nachfolgend wird ein Ausführungsbeispiel des Gegenstandes der Erfindung anhand der beigefügten Zeichnungen näher erläutert. Es zeigt:
- Figur 1: eine Seitenansicht der erfindungsgemäßen Betätigungsvorrichtung im Freigabezustand für die Lenksäulenbaueinheit,
- Figur 2: die in Figur 1 gezeigte Betätigungsvorrichtung im Blockierzustand für die zugehörige Lenksäulenbaueinheit
- Figur 3: eine Draufsicht auf die Betätigungsvorrichtung entsprechend des Pfeiles A in Figur 1
- Figur 4: eine Detaildarstellung der zur Betätigungsvorrichtung gehörenden Verbindungsstange und
- Figur 5: eine Schnittdarstellung durch die Verbindungsstange entsprechend der Schnittlinie B - B aus Figur 4

Die in den Figuren dargestellte Betätigungsvorrichtung dient dazu, eine zugehörige Lenkrollenbaueinheit, welche vorzugsweise an einem Transportwagen für den industriellen Einsatz angeordnet ist, in eine Blockierstellung für die zur Lenksäulenbaueinheit gehörige Rolle sowie in eine Freigabestellung zu bringen. In der Freigabestellung ist die Rolle drehbar, gleichzeitig kann das die Rolle aufnehmende Gabelelement um eine senkrechte Achse gedreht werden. Auf eine detaillierte Darstellung der Lenkrollenbaueinheit wurde in den Zeichnungen verzichtet, da sie nicht Gegenstand der Erfindung ist.

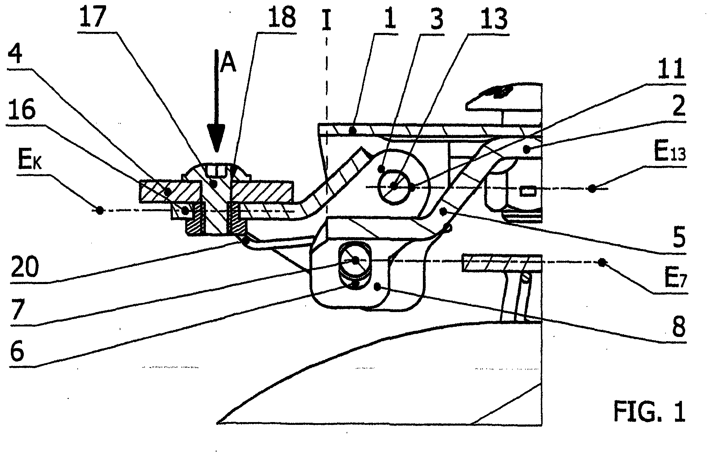

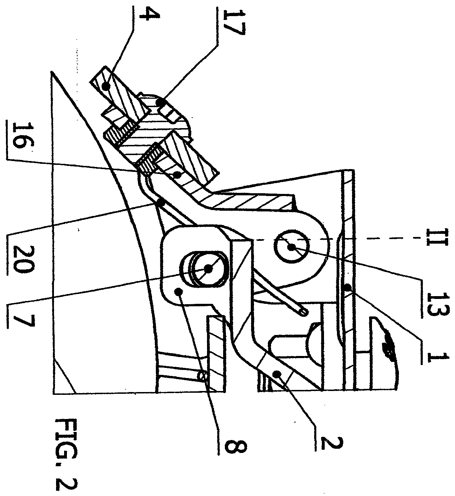

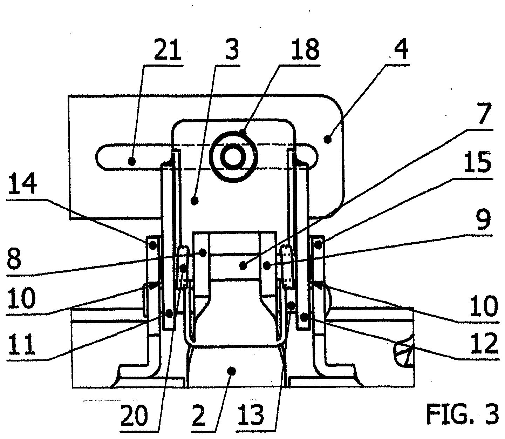

Die Blockierung und Freigabe erfolgt durch Bewegung eines Betätigungsschiebers 2 von einer in der Figur 1 dargestellten Stellung I in eine in der Figur 2 dargestellte Blockierstellung II. Der Betätigungsschieber 2 besitzt an seinem vorderen freien Ende ein u-förmig ausgebildetes Halteelement 5. An diesem Halteelement 5 ist eine Langlochbohrung 6 angeordnet, die von einer Führungsachse 7 durchgriffen wird. In der Ansicht der Figur 3 ist die u-förmige Gestaltung des Betätigungsschiebers 2 an seinem vorderen freien Ende mit der Ausbildung der Schenkel 8 und 9 deutlich zu sehen.

Die Führungsachse 7 durchgreift gleichzeitig eine Bohrung 10 in einem Anschlusshebel 3. Der Anschlusshebel 3 ist im Bereich der Bohrung 10 ebenfalls U-förmig mit zwei beabstandet parallel zueinander angeordneten Schenkeln 11 und 12 ausgestattet.

Wie aus den Figuren 1 und 2 deutlich wird, stehen die Schenkel 11 und 12 des Anschlusshebels 3 nach oben über den Bereich des Betätigungsschiebers 2, der durch die Schenkel 8 und 9 definiert ist, vor. In diesem oberen Bereich befindet sich eine Achse 13, die zum einen eine Drehbarkeit des Anschlusshebels 3 um diese Achse 13 gewährleistet, gleichzeitig dient sie zur Anbindung des Anschlusshebels 3 an eine Montageplatte 1 der Lenksäulenbaueinheit.

Die Montageplatte 1 ist - wie dies ebenfalls aus der Figur 3 deutlich wird - im Bereich der Betätigungsvorrichtung mit zwei Schenkeln 14 und 15 versehen, in der die Achse 13 in einer Bohrung aufgenommen ist. Die Führungsachse 7 und die Achse 13 sind jeweils in horizontalen Ebenen E₇ und E₁₃ angeordnet.

Der Anschlusshebel 3 besitzt in seinem vorderen, den Schenkeln 11 und 12 abgewandten Bereich, eine vorstehende Lasche 16. Die Lasche 16 ist horizontal angeordnet und definiert eine Koppelebene E_{K} zwischen der besagten Lasche 16 und einer an ihrer Oberseite angeordneten Verbindungsstange 4. Die Verbindungsstange 4 und die Lasche 16 sind über eine Schraube 17 fest miteinander verbunden. Erfindungsgemäß ist die Koppelebene E_{K} im Bereich zwischen den Lageebenen E₇ und E₁₃ angeordnet. Die Anordnung ermöglicht eine entsprechende Anbindung der Verbindungsstange 4 mit den Anschlusshebeln 3 in den jeweiligen am Ende der Verbindungsstange 4 liegenden Befestigungspunkten 18 und 19.

Die Anordnung der Koppelebene E_{K} zu den Lageebenen E₇ und E₁₃ in Verbindung mit der Anordnung der Achse 13 sowie der Führungsachse 7 gewährleistet eine definierte vordere Position I des Betätigungsschiebers 2 als Freigabestellung sowie eine definierte hintere Position II des Betätigungsschiebers 2 als Verriegelungsposition für die Lenkrollenbaueinheit. Die genannten Endpositionen werden durch die Unterstützung der Feder 20 gehalten.

Wie aus der Figur 3 ersichtlich ist, besitzt die Verbindungsstange 4 an ihren freien Enden im Bereich der jeweiligen Befestigungspunkte 18 und 19 Langlochausnehmungen 21. Die Langlochausnehmungen 21 sind mit ihrer Mittelachse in Richtung der Längsachse der Verbindungsstange 4 angeordnet und ermöglichen eine Querverstellung der Verbindungsstange 4 gegenüber den Befestigungspunkten 18 und 19. Durch die geschilderte Maßnahme können Abstandstoleranz zwischen den beiden Befestigungspunkten 18 und 19 ausgeglichen werden, darüber hinaus besteht die Möglichkeit, die Verbindungsstange 4 für verschiedene Transportwagenvarianten unterschiedlicher Breite zu nutzen, bei der die Lenksäulenbaueinheiten unterschiedlichen Abstand aufweisen.

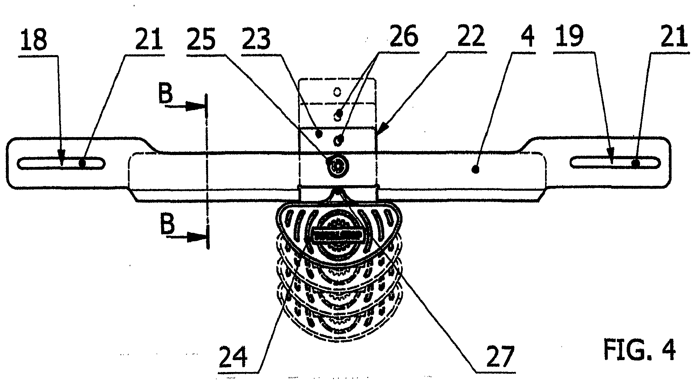

Aus der Figur 4 wird deutlich, dass in der Mitte der Verbindungsstange 4 zwischen den Befestigungspunkten 18 und 19 ein Fußpedal 22 angebracht ist. Das Fußpedal 22 besteht aus einer Befestigungslasche 23 und einer am vorderen freien Ende befindlichen Trittfläche 24. Das Fußpedal 22 wird mit Hilfe der Schraube 25 an der Verbindungsstange 4 festgelegt.

Wie aus der Figur 4 darüberhinaus deutlich wird, besitzt die Befestigungslasche 23 mehrere beabstandet auf der Mittellinie mit der Befestigungslasche 23 angeordnete Bohrungen 26, durch die eine Festlegung des Fußpedals 22 in unterschiedlichen Stellungen ermöglicht wird. Durch diese konstruktive Gestaltung kann die Trittfläche 24 nah an der Verbindungsstange 4 oder entfernter von ihr angeordnet werden.

Eine entferntere Anordnung der Trittfläche 24 von der Verbindungsstange 4 vermindert die Betätigungskräfte, da der entsprechende Hebelarm größer wird.

Im hinteren Bereich der Trittfläche 24, die der Verbindungsstange 4 zugewandt ist, befindet sich an ihrer Oberseite entsprechend einer vorteilhaften Weiterbildung des Gegenstandes der Erfindung ein als Vorsprung ausgebildeter Puffer 27. Da die gesamte Trittfläche 24 aus einem Kunststoffmaterial hergestellt ist, hilft der Puffer 27 Klappergeräusche durch Vibration der Verbindungsstange 4 bei Bewegung des Transportwagens auf holperigem Untergrund zu vermeiden.

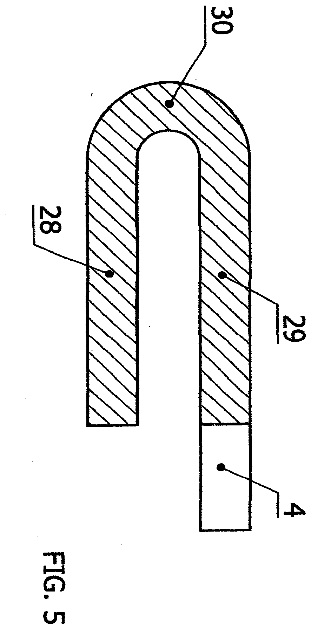

Aus der Figur 5 wird abschließend ersichtlich, dass der Querschnitt der Verbindungsstange 4 entsprechend der Darstellung B - B aus Figur 4 eine U-förmige Form aufweist. Die U-förmige Form ist definiert durch zwei beabstandet übereinander angeordnete Schenkeln 28 und 29 und einen zwischen den beiden Schenkeln 28 und 29 angeordneten Verbindungssteg 30. Der Verbindungssteg 30 ist gerundet, so dass am vorderen dem Transportwagen abgewandten Ende der Verbindungsstange 4 Verletzungen durch eine Scharfkantigkeit des Querschnittes vermieden werden.

### Bezugszeichenliste:

- 1: Montageplatte
- 2: Betätigungsschieber
- 3: Anschlusshebel
- 4: Verbindungsstange
- 5: Halteelement
- 6: Langlochbohrung
- 7: Führungsachse
- 8: Schenkel
- 9: Schenkel
- 10: Bohrung
- 11: Schenkel
- 12: Schenkel
- 13: Achse
- 14: Schenkel
- 15: Schenkel
- 16: Lasche
- 17: Schraube
- 18: Befestigungspunkt
- 19: Befestigungspunkt
- 20: Feder
- 21: Langloch
- 22: Fußpedal
- 23: Befestigungslasche
- 24: Trittfläche
- 25: Schraube
- 26: Bohrung
- 27: Puffer
- 28: Schenkel
- 29: Schenkel
- 30: Verbindungssteg

- E_{K}: Koppelebene
- E₇: Lageebene
- E₁₃: Lageebene

## Patentansprüche

1. Betätigungsvorrichtung für zwei feststellbare Lenkrollenbaueinheiten an einem fahrbaren Transportwagen mit an jeder Lenkrollenbaueinheit angeordneten Betätigungsschiebern (2) für eine Feststellvorrichtung, die jeweils in einer Montageplatte (1) der jeweiligen Lenkrollenbaueinheit geführt sind und auf einer horizontalen Führungsachse (7) gelenkig mit einem Anschlusshebel (3) gelagert sind, wobei der Anschlusshebel (3) auf einer an der Montageplatte festgelegten horizontalen Achse (13) drehbar ist und mittels einer Verbindungsstange (4) beide Anschlusshebel miteinander gekoppelt sind, wobei die horizontale Koppelebene E_{K} von Verbindungsstange (4) und Anschlusshebel (3) zwischen der horizontalen Lageebene E₇ der Führungsachse (7) und der beabstandet dazu liegenden horizontalen Lageebene E₁₃ der Drehachse (13) angeordnet ist,
**dadurch gekennzeichnet, dass**
der Querschnitt der Verbindungsstange (4) eine u-förmige Form aufweist.

2. Betätigungsvorrichtung nach Anspruch 1,
**dadurch gekennzeichnet, dass**
der Befestigungspunkt zwischen Verbindungsstange (4) und Anschlusshebel (3) auf der Verbindungsstange in Richtung ihrer Längsachse verschiebbar ist.

3. Betätigungsvorrichtung nach Anspruch 2,
**dadurch gekennzeichnet, dass**
zur Verschiebung eine Langlochausnehmung (6) an der Verbindungsstange (4) vorhanden ist.

4. Betätigungsvorrichtung nach einem der Ansprüche 1-3,
**dadurch gekennzeichnet, dass**
in der Mitte zwischen den Befestigungspunkten von Verbindungsstange (4) und Anschlusshebeln (3) ein Fußpedal (22) angeordnet ist, welches auf der dem Transportwagen abgewandten Vorderseite der Verbindungsstange (4) über diese vorsteht.

5. Betätigungsvorrichtung nach Anspruch 4,
**dadurch gekennzeichnet, dass**
der Abstand des vorderen freien Endes des Fußpedals (22) und seinem Befestigungspunkt an der Verbindungsstange (4) variabel ist.

6. Betätigungsvorrichtung nach einem der Ansprüche 1 - 5,
**dadurch gekennzeichnet, dass**
am Fußpedal (22) ein Puffer (27) zur Endlagendämpfung der Verbindungsstange (4) in der Freigabestellung der Lenkrollenbaueinheiten vorhanden ist

## Claims

1. Operating mechanism for two lockable castor wheel units on a displaceable trolley having operating pushing means (2) for a locking mechanism disposed on each castor wheel unit which are guided respectively in a mounting plate (1) of the respective castor wheel unit and mounted so as to be articulatingly linked to a connecting lever (3) on a horizontal guide shaft (7), and the connecting lever (3) is rotatable on a horizontal shaft (13) affixed to the mounting plate and the two connecting levers are coupled with one another by means of a connecting rod (4), and the horizontal coupling plane E_{K} of connecting rod (4) and connecting lever (3) is disposed between the horizontal bearing plane E₇ of the guide shaft (7) and the horizontal bearing plane E₁₃ of the pivot shaft (13) lying at a distance apart therefrom,
**characterised in that**
the cross-section of the connecting rod (4) is U-shaped.

2. Operating mechanism as claimed in claim 1,
**characterised in that**
the point of attachment between connecting rod (4) and connecting lever (3) can be adjusted on the connecting rod in the direction of its longitudinal axis.

3. Operating mechanism as claimed in claim 2,
**characterised in that**
a slot (6) is provided in the connecting rod (4) to enable the adjustment.

4. Operating mechanism as claimed in one of claims 1-3,
**characterised in that**
a foot pedal (22) is disposed in the middle between the attachment points of connecting rod (4) and connecting levers (3), which protrudes out from and beyond the front face of the connecting rod (4) facing away from the trolley.

5. Operating mechanism as claimed in claim 4,
**characterised in that**
the distance of the front free end of the foot pedal (22) and its point of attachment to the connecting rod (4) is variable.

6. Operating mechanism as claimed in one of claims 1 - 5,
**characterised in that**
a cushion (27) is provided on the foot pedal (22) to provide end position cushioning for the connecting rod (4) when the castor wheel units are in the released position.

## Revendications

1. Dispositif d'actionnement pour deux éléments de roue guide blocables sur un chariot mobile avec des leviers d'actionnement (2) disposés sur chaque élément de roue guide destinés à un dispositif de blocage, les leviers d'actionnement étant chacun guidés dans une plaque de montage (1) de l'élément de roue guide correspondant et articulés avec un levier de raccordement (3) sur un axe de guidage horizontal (7), le levier de raccordement (3) pouvant tourner sur un axe de rotation horizontal (13) immobilisé sur la plaque de montage et les deux leviers de raccordement étant couplés ensemble au moyen d'une barre de liaison (4), le plan de couplage horizontal E_{K} de la barre de liaison (4) et du levier de raccordement (3) étant disposé entre le plan horizontal E₇ de l'axe de guidage (7) et le plan horizontal E₁₃, à distance de celui-ci, de l'axe de rotation (13),
**caractérisé en ce que** la section de la barre de liaison (4) présente une forme en U.

2. Dispositif d'actionnement selon la revendication 1, **caractérisé en ce que** le point de fixation entre la barre de liaison (4) et le levier de raccordement (3) est translatable sur la barre de liaison en direction de son axe longitudinal.

3. Dispositif selon la revendication 2, **caractérisé en ce que** la barre de liaison (4) comporte un évidement oblong (6) destiné à la translation.

4. Dispositif selon l'une quelconque des revendications 1 à 3, **caractérisé en ce que**, au milieu entre les points de fixation de la barre de liaison (4) et des leviers de raccordement (3), est disposée une pédale (22) qui fait saillie sur la face avant, opposée au chariot, de la barre de liaison (4) au-dessus de celle-ci.

5. Dispositif selon la revendication 4, **caractérisé en ce que** la distance entre l'extrémité avant libre de la pédale (22) et son point de fixation sur la barre de fixation (4) est réglable.

6. Dispositif de fixation selon l'une quelconque des revendications 1 à 5, **caractérisé en ce qu'**un amortisseur (27) se trouve sur la pédale (22) pour l'amortissement en fin de course de la barre de liaison (4) en position de libération des roues guides.
